**Europäisches Patentamt**

**European Patent Office**

**Office européen des brevets**

(19)

(11) Veröffentlichungsnummer: **0 676 873 A2**

## (12) EUROPÄISCHE PATENTANMELDUNG

(21) Anmeldenummer: **95104589.7**

(22) Anmeldetag: **28.03.95**

(51) Int. Cl.6: **H04J 3/07**

(30) Priorität: **07.04.94 DE 4412060**

(43) Veröffentlichungstag der Anmeldung:
**11.10.95 Patentblatt 95/41**

(84) Benannte Vertragsstaaten:
**DE FR GB IT**

(71) Anmelder: **SIEMENS AKTIENGESELLSCHAFT**
**Wittelsbacherplatz 2**
**D-80333 München (DE)**

(72) Erfinder: **Siebert, Harry, Dipl.-Ing.**
**Angerhofstrasse 6**
**D-82110 Germering (DE)**
Erfinder: **Sievers, Volker, Dipl.-Ing.**
**Hautzenbergerstrasse 20**
**D-80687 München (DE)**
Erfinder: **Hocke, Hans-Joachim, Dipl.-Ing**
**Regensburgerstrasse 26**
**D-84034 Landshut (DE)**

(54) **Anordnung zur Rückgewinnung eines plesiochronen Digitalsignals.**

(57) Die Anordnung zur Rückgewinnung eines plesiochronen Digitalsignals (DS1) enthält einen Pufferspeicher (6) einen Rampengenerator (5) und einen steuerbaren aperiodischen quasiperiodischen Teiler (8), der den Ausgabetakt (TA1) für das Auslesen eines Digitalsignals (DS1) liefert. Entsprechend der empfangenen Stopfinformation (SI1) wird der Zählerstand (Z) des Rampengenerator (5) verringert, bis die korrekte Phasenkorrektur durchgeführt ist.

FIG 1

EP 0 676 873 A2

Rank Xerox (UK) Business Services
(3.10/3.09/3.3.4)

EP 0 676 873 A2

Die Erfindung betrifft eine Anordnung zur Rückgewinnung eines plesiochronen Digitalsignals

Um plesiochrone Digitalsignale in einem Datenkanal mit konstanter Bitrate übertragen zu können, erfolgt eine Anpassung der Bitraten durch Stopfen. Das übertragene Signal enthält das Datensignal und in periodischen Anständen Stopfstellen, die je nach Bedarf entweder Bits des Datensignals oder Leerbits enthalten.

Wenn die Bitrate des Datensignals hinter der reservierten Übertragungsbitrate zurückbleibt, müssen Leerbits eingefügt werden; dies wird als Positiv-Stopfen bezeichnet.

Überschreitet dagegen die Bitrate des Datensignals die reservierte Übertragungsbitrate, dann wird zusätzlich mindestens ein Datenbit in die Stopfstelle(n) eingefügt; dies wird als Negativ-Stopfen bezeichnet. Stopfverfahren, die beide Stopfarten nutzen, werden als Positiv-Null-Negativ-Stopfverfahren bezeichnet.

Diese Verfahren werden auch dann angewendet, wenn mehrere Digitalsignale zu einem Multiplexsignal zusammengefügt werden oder wenn Multiplexsignale einer unteren Hierarchieebene zu einem Multiplexsignal einer höheren Hierarchieebene zusammengefaßt werden, wie dies beispielsweise bei den gebräuchlichen PCM-Multiplexverfahren oder bei der synchronen digitalen Hierarchie (SDH) erfolgt.

Die Stopfvorgange umfassen jeweils ein Bit oder mehrere Bits oder auch ein oder mehrere Bytes.

Jeder Stopfvorgang erzeugt einen Phasensprung des abgehenden Digitalsignals. Auf der Empfangsseite wird das Digitalsignal mit einem Lückentaktsignal in einen Pufferspeicher eingeschrieben und mit einem kontinuierlichen Taktsignal ausgelesen. Die Phasensprünge des Digitalsignals bzw. des zugehörigen Ausgabetaktsignals werden am Empfangsort durch eine analoge oder digitale Phasenregelschleife (PLL) geglättet. Entsprechend ihrer Dimensionierung wirkt die Phasenregelschleife wie ein Tiefpaß. Die Amplitude der durch Stopfen verursachten Phasensprünge (Jitter) wird durch die Phasenregelschleife stark reduziert, falls der zeitliche Abstand der Phasensprünge sehr klein gegenüber der Zeitkonstante der Phasenregelschleife ist.

Beim Positiv-Null-Negativ-Stopfverfahren können die zeitlichen Abstände der Phasensprünge jedoch sehr groß sein. In diesem Fall werden ohne zusätzliche Maßnahmen die Phasensprünge durch die Phasenregelschleife wenig gedämpft. Aus der internationalen Patentanmeldung WO 91/12678 ist ein Verfahren und eine Anordnung zur Taktrückgewinnung bekannt. Sprunghafte Änderung der Korrekturgröße für die Regelschleife werden zunächst unterdrückt, um sie dann innerhalb einer längeren Ausgleichszeit kontinuierlich oder in kleinen Schritten an eine digital ausgeführte Phasenregelschleife weiterzugeben.

Die Steuerung der Phasenregelschleife erfolgt abhängig vom Füllstand eines Rampenzählers, in den Anfangswerte bei Stopfvorgängen geladen werden. Nur in der Endstellung des Rampenzählers erfolgt eine Steuerung eines PLL-Zählers, der die Frequenz des Ausgabetaktes bestimmt, durch den Füllstand des Pufferspeichers. Die Regelschleife ist so konzipiert, daß auch bei einem synchronen Taktsignal ständig eine Phasenkorrektur erfolgt. Zur Realisierung werden zahlreiche Zähler und eine relativ komplizierte Aritbmetik benötigt.

Hierdurch erfolgt nur eine langsame Änderung der Phase des Taktsignals.

Durch die geringe Geschwindigkeit der Phasenkorrektur wird aus einem sonst erzeugten Jitter eine als Wander bezeichnete allmählichen Änderung der Phase.

Aufgabe der Erfindung ist es, eine einfachere digital arbeitende Anordnung für den Empfangsteil anzugeben, die nur einen minimalen Jitter mit hoher Frequenz erzeugt. Diese sollte einfach an die unterschiedlichen Datenraten angepaßt werden können.

Diese Aufgabe wird durch die im Anspruch 1 angegebene Anordnung zur Rückgewinnung eines Digitalsignals gelöst.

Vorteilhafte Ausbildungen sind in den Unteransprüchen angegeben.

Besonders vorteilhaft bei der Anordnung ist, daß die Steuerung der Phasenkorrektur nur durch die Stopfinformation erfolgt und nicht wie bisher vom Speicherinhalt abhängig gemacht wird. Lediglich in der Einschaltphase und bei Störungen wird der Füllgrad des Speichers ebenfalls als Steuerkriterium zur Phasenkorrektur verwendet.

Ein Hilfsoszillator ist bei dieser Anordnung nicht erforderlich.

Besonders vorteilhaft ist die Verwendung eines aperiodischquasiperiodischen Teilers, durch den sich alle rationalen Teilungsverhältnisse realisieren lassen. Durch Einfügen oder Ausblenden von Unterperioden dieses Teilers wird nur ein minimaler Jitter bewirkt.

Zweckmäßig ist die Verwendung eines Rampengenerators zur Steuerung der Stopfvorgänge. Bei jedem Stopfvorgang wird ein Zahlenwert geladen, der in zahlreichen Phasenkorrekturen wieder auf seinen Nullwert reduziert wird.

Die Geschwindigkeit der Phasenkorrektur kann auch von der Größe und der Häufigkeit der erforderlichen durch die Stopfinformation vorgegebene Phasenkorrektur abhängig erfolgen.

Einer der größten Vorteile der Erfindung besteht in der Verwendung von programmierbaren Teilern.

2

Hierdurch ist die Anordnung an die unterschiedlichsten Datenraten und an alle Erfordernisse bei den Stopfvorgängen anpaßbar.

Die Erfindung wird anhand von Figuren näher erläutert.

Es zeigen:

Fig. 1    ein Prinzipschaltbild der Anordnung,

Fig. 2    ein Blockschaltbild eines steuerbaren A/B-Frequenzteilers,

Fig. 3    ein Blockschaltbild eines Rampengenerators und

Fig. 4    eine Variante des Rampengenerators für unterschiedliche Zeitkonstanten.

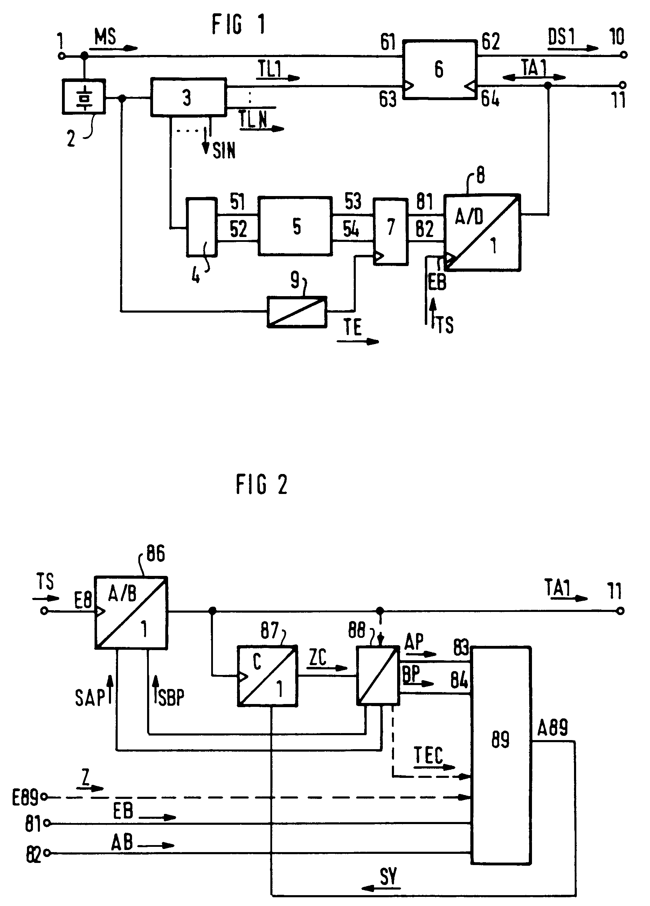

Das in Figur 1 dargestellte Prinzipschaltbild enthält einen Taktregenerator 2, dem über den Eingang 1 ein synchrones Multiplexsignal MS zugeführt wird. Der Ausgang des Taktregenerators ist mit einer 'Rahmenerkennung und Taktversorgung' 3 verbunden, die den einzelnen Digitalsignalen zugeordnete Lückentakte TL1 bis TLN und die entsprechende Stopfinformation SI1 bis SIN liefert. Schaltungen für einen Taktregenerator 2 und eine 'Rahmenerkennung und Taktversorgung' 3 sind jedem Fachmann geläufig und beispielsweise in "Digitale Übertragungstechnik" von Peter Kahl, Decker's Verlag, Band 1 unter 2.1.2.3.10, Seite 22 bis 25 beschrieben.

Das empfangene Multiplexsignal MS wird den Dateneingängen, z.B. dem Dateneingang 61, von N Pufferspeichern zugeführt, von denen nur der Pufferspeicher 6 für das erste Datensignal DS1 dargestellt ist. Ein Ausgang der 'Rahmenerkennung und Taktversorgung' 3 , an dem ein Lücken aufweisender Schreibtakt abgegeben wird, ist mit einem Schreibtakt-Eingang 63 des Pufferspeichers verbunden. Von der 'Rahmenerkennung und der Taktversorgung' 3 werden die Stopfinformationssignale SI1 bis SIN über einen Codierer 4 jeweils einem Rampenzähler 5 zugeführt. Dessen Ausgänge 53 und 54 sind über eine Logikschaltung 7 mit den Steuereingängen 81 bzw. 82 eines Frequenzteilers 8 verbunden, dessen Takteingang E8 der Systemtakt TS zugeführt ist.

Der Taktausgang 11 des Frequenzteilers 8 ist mit dem Lesetakt-Eingang 64 des Pufferspeichers 6 verbunden. Ein Zeitgeber 9 liefert ein vom Systemtakt TS abgeleitetes Speichertaktsignal TE an die Logikschaltung 7.

Der Pufferspeicher 6, der Rampenzähler 5 und der Frequenzteiler 8 sind für jedes Digitalsignal seperat vorgesehen. Der Codierer 4 und der Zeitgeber 9 (oder Teile von diesen) können gemeinsam für alle Digitalsignale genutzt werden.

Von dem am Eingang 1 anliegenden Multiplexsignal MS wird in dem Taktregenerator 2 der Systemtakt TS abgeleitet. Die 'Rahmenerkennung und Taktversorgung' 3 erkennt durch ein Rahmenkennwort oder entsprechende festgelegte Bitfolgen den Rahmenanfang und ordnet den einzelnen Digitalsignalen, z.B. dem Digitalsignal DS1, einen entsprechenden Lückentakt, den Schreibtakt TL1 zu, mit dem das Digitalsignal DS1 in den Pufferspeicher 6 eingeschrieben wird.

Die Aufgabe des Rampenzählers 5, des Zeitgebers 9 und des Frequenzteilers 8 besteht darin, einen möglichst gleichmäßigen Ausgabetakt TA1 zu erzeugen, mit dem das Digitalsignal TS1 aus dem Pufferspeicher 6 ausgelesen und am Datenausgang 62 des Speicher bzw. am Digitalsignal-Ausgang 10 abgegeben wird, während das zugehörige Taktsignal TA1 am Taktausgang 11 anliegt.

Im Mittel muß die Datenrate des empfangenen Digitalsignals und des ausgelesenen Digitalsignals übereinstimmen.

Im Gegensatz zu den bekannten Schaltungen zur Taktanpassung auf der Empfangsseite wird das Ausgabetaktsignal TA1 nicht vom Füllgrad des Pufferspeichers sondern nur von der Stopfinformation SI1 gesteuert (wenn man von Störungen auf dem Übertragungsweg und der Einschaltphase absieht).

Zunächst soll die Funktion des in FIGUR 2 genauer dargestellten Frequenzteilers 8 näher erläutert werden. Der Frequenzteiler 8 gestattet die aperiodisch quasiperiodische Frequenzsynthese bzw. Frequenzteilung, wie sie in der Zeitschrift Frequenz 27, (1973) 9, Seite 249 bis 254 und Frequenz 27 (1973) 10, Seite 279 bis 283 beschrieben ist. Er besteht aus einem ersten umschaltbaren A/B-Teiler 86, dessen Takteingang E8 das Systemtaktsignal TS zugeführt wird und der am Taktausgang 11 das Ausgabetaktsignal TA1 abgibt. Diesem Teiler ist ein weiterer C-Teiler 87 nachgeschaltet, der die Unterperioden zählt und dessen Zählerstand ZC über einen Decoder 88 die aktuelle Unterperiode - A oder B -des A/B-Teilers 86 und Steuersignale SAP und SEP zur Festlegung der nächsten Unterperiode angibt.

Die Ausgänge des Decoders sind an Synchronisiereingänge 83 und 84 einer Synchronisierschaltung 89 geführt. Dieser werden über die Steuereingänge 81 und 82 Phasenkorrekturbefehle EB und AB zugeführt. Der Steuerausgang A89 ist auf den Steuereingang des C-Teilers 87 geführt.

Mit Hilfe dieser Teileranordnung kann zunächst jedes rationale Teilungsverhältnis realisiert werden.

Hierzu ein Beispiel:

Die Frequenz des Systemtaktes beträgt 129,6 MHz und die Taktfrequenz des Ausgabetaktes TA beträgt 2,048 MHz. Dies ergibt ein Teilungsverhältnis von

$$(1) \quad \frac{f_{TS}}{f_{TA}} = \frac{129,6}{2,048} = \frac{2025}{32}$$

Mit einem A/B-Teiler 86, der die Unterperiode A = 63 und die Unterperiode B = 64 erzeugen kann, und einem C-Teiler, der einen Zählumfang von 32 A- und B-Unterperioden aufweist, kann mit n = 23 A-Unterperioden und m = 9 B-Unterperioden dieses Teilungsverhältnis realisiert werden.

Eine geeignete Unterperiodenverteilung hierzu ist:

BAAA BAA BAAA BAA BAAA BAA BAAA BAA BAAA

Nach jeder Unterperiode A oder B wird ein Impuls des Ausgabetaktsignals TA1 abgegeben, mit dem das Digitalsignal DS1 ausgelesen wird. Diese Impulse des Ausgabetaktsignals und die Schritte (Bits) des Digitalsignals weisen einen durch die Frequenzteilung bedingten minimalen Jitter auf, der nicht weiter reduziert zu werden braucht.

Dieses exakte Teilungsverhältnis macht Stopfvorgänge dann überflüssig, wenn synchrone Digitalsignale übertragen werden.

Da es sich hier in der Regel jedoch um plesiochrone Signale handelt, muß die Phase des A/B-Teilers verstellt werden. Bei den bisherigen Lösungen geschieht dies durch Ein- oder Ausblenden eines oder mehrerer Impulse des Eingangstaktsignals (Systemtaktsignals TS), so daß der Frequenzteiler eine kürzere oder längere Periodendauer aufweist.

Um den Jitter weiter zu verringern, wird hier eine andere Korrekturmethode gewählt. Über die Synchronisierschaltung wird durch in den C-Teiler eingreifendes Synchronisiersignal SY eine Unterperiode A oder B ein- oder ausgeblendet.

Das Einblenden oder Ausblenden einer Unterperiode kann in gleichen, durch den Zeitgeber 9 festgelegten Zeitabständen erfolgen, die einer normalen Überperiode mit 32 Unterperioden entsprechen. Ist dies zufällig eine ungeeignete B-Unterperiode wird die nächste A-Unterperiode ein- oder ausgeblendet.

Der Zeitgeber 9 kann auch durch die Teiler 86, 87 und den Decoder 88 ersetzt werden. Es wird ein modifiziertes Einspeichertaktsignal TEC erzeugt, dessen Takte zwar beim Ein- und Ausblenden geringfügig unterschiedliche Abstände aufweisen, dafür jedoch stets an derselben Position einer Überperiode auftreten - wie im folgenden Beispiel - und über die strichlierte Verbindung von Decoder zur Synchronisierschaltung 89 gelangen.

Bei den geringen Frequenzunterschieden erfolgen Korrekturvorgänge in größeren Zeitabständen. In dem foldenden Beispiel, das lediglich zur Ermittlung der Größe eines Korrekturschrittes dient, soll dagegen in jeder Zeile ein Korrekturschritt erfolgen. Dies wird anhand der folgenden Tabelle 1 näher erläutert.Beispielsweise soll eine kurze A-Unterperiode eingeblendet werden; dies ist die Unterperiode **A**.

EP 0 676 873 A2

**Tabelle 1**

```
        1                                    32
a00)  BAAABAABAAABAABAAABAABAAABAABAAA
a01)  BAAABAAABAAABAABAAABAABAAABAABAA A

b01)  BAAABAAABAAABAABAAABAABAAABAABAA
b02)  ABAAABAAABAAABAABAAABAABAAABAABA
b03)  AABAAABAAABAAABAABAAABAABAAABAAB
b04)  AAABAAABAAABAAABAABAAABAABAAABAA
              .        .        .              .

              .                 .             .

b27)  ABAAABAABAAABAABAAABAABAAABAAAABAA
b00)  AABAAABAABAAABAABAAABAABAAABAAAB
b28)  AAABAAABAABAAABAABAAABAABAAABAAA
              .                 .             .
b30)  ABAAABAAABAABAAABAABAAABAABAAABA
b31)  AABAAABAAABAABAAABAABAAABAABAAAB
b32)  AAABAAABAAABAABAAABAABAAABAABAAA
a00)  BAAABAABAAABAABAAABAABAAABAABAAA
```

Die erste Zeile a00) zeigt die reguläre Überperiode des Frequenzteilers 8.

Durch das Einfügen einer A-Unterperiode z. B. in der sechsten Position ergibt sich eine verlängerte Überperiode a01), die eine kurze A-Unterperiode mehr aufweist, d. h. die durchschnittliche Unterperiodendauer verkleinert sich geringfügig.

Bezogen auf die ursprünliche Überperiodendauer verschiebt sich ab der eingefügten A-Unterperiode das Periodenmuster nach jeder Einfügung einer A-Unterperiode nach rechts. Die nächste Zeile b01) in der Tabelle zeigt nur die 32 Unterperioden, die zu einer Überperiode gehören. Die letzte durch einen vorausgehenden Zwischenraum gekennzeichnete A-Unterperiode wird die erste Unterperiode der nächsten Überperiode b02) mit 32 Unterperioden. Um die Phase des Ausgangstaktes um ein zusätzlich eingefügtes Stopfbit korrigieren zu können, sind viele dieser Korrekturschritte notwendig. Einige der hieraus resultierenden Überperioden sind - bezogen auf den ursprünglichen Zeitrahmen - in der Tabelle 1 dargestellt.

Nach 32 Korrekturschritten ist die ursprüngliche Überperiode wieder hergestellt. Während der 32 Korrekturschritte (d. h. in der Tabelle nach 32 aufeinanderfolgenden Überperioden mit jeweils 32 Unterperioden) wurden insgesamt 9 B-Unterperioden durch 9 A-Unterperioden erstetzt und hierdurch wurde die Phase um 9 Perioden des Sytemtaktsignals korrigiert (Die Überperiode b00) ohne Korrektur wurde nicht mitgezählt).

Die so erzielte Phasenkorrektur beträgt im Mittel je Korrekturschritt (je eingefügter A-Periode):

$$(2)\quad \Delta\varphi = \frac{9}{32}\frac{1}{f_{TS}} = \frac{1}{225}\cdot UI$$

(mit

5

$$UI = \frac{2025}{32} \frac{1}{f_{TS}} ;$$

UI = Bitdauer des ausgegebenen Digitalsignals von 2,048 Mbit/s).

Es müssen folglich N = 225 dieser A-Unterperioden eingeblendet werden, um insgesamt eine Phasenkorrektur von einem UI zu erreichen.

Mit dem Einfügen (oder Ausblenden)von Unterperioden wird somit eine äußerst feine Phaseneinstellung des Arbeitstaktes möglich, wobei die Jitterfrequenz praktisch nicht verändert wird und eine Phasenkorrektur nur Bruchteile einer Periode des Systemtaktsignals TS ausmacht.

Die Schaltungen für den A/B-Teiler 86, den C-Teiler 87 und den Decoder 88 können auf unterschiedlichste Weise vom Fachmann realisiert werden. Es ist auch ausreichend, eine Leitung zur Steuerung der A- oder B-Periode rückzukoppeln, wenn die korrekten Zeitpunkte zum Umschalten zwischen den Perioden im A/B-Teiler 86 selbst realisiert werden.

Das Ein- und Ausblenden von Perioden erfolgt über die Steuereingänge 81 und 82. Ein 'Einfügen-Befehl' EB bewirkt an geeigneter durch den Decoder 88 und die Synchronisierschaltung 89 festgelegter Stelle das Einblenden einer weiteren A-Periode durch Ausblenden eines dem C-Teiler 87 zugeführten Taktes (oder einer Umschaltung der Periodendauer) durch einen entsprechenden Synchronisierbefehl SY. Ein 'Ausblenden-Befehl' AB bewirkt dagegen einen Zusatzimpuls, so daß der C-Zähler schneller seine Endstellung erreicht, also nur C-1 Zähltakte benötigt.

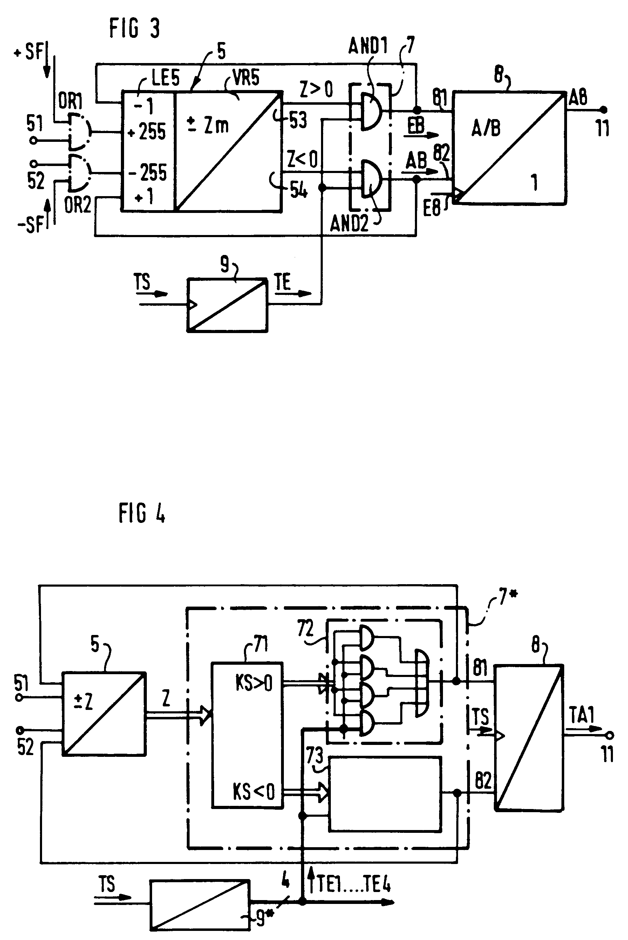

In Figur 3 ist ein Ausführungsbeispiel des Rampengenerators 5 dargestellt. Dieser enthält eine Logikeinheit LE5, die gegebenenfalls den Codierer 4 beinhaltet, und einen Vorwärts-Rückwärts-Zähler VR5 mit einem Zählbereich von +/- Zm. Der Logikeinheit wird entweder die Stopfinformation SI zugeführt, die sie dann in einen Zahlenwert umsetzt, oder bereits der entsprechende Zahlenwert zugeführt, in diesem Beispiel +N (= +225) oder -N , der die Anzahl der durchzuführenden Korrekturvorgänge (der ein- oder auszublendenden A-Perioden) beinhaltet. Die Logikeinheit LE5 dient zum Einstellen des Vorwärts-Rückwärts-Zählers VR5, an dessen Ausgang 53 ein Zählerstand >0 und an dessen Ausgang 54 ein Zählerstand <0 abgegeben wird. Über die Logikschaltung 7, die hier zwei UND-Gatter N1 und N2 enthält, wird zu den Zeitpunkten, an denen jeweils vom Zeitgeber 9 ein Einspeicherimpuls TE abgegeben wird, der Frequenzteiler 8 angesteuert, d.h. eine A-Periode (oder B-Periode) eingeblendet oder ausgeblendet wird.

Zur Funktionsbeschreibung wird von dem Zählerstand Null des Vorwärts-Rückwärts-Zählers VR5 ausgegangen , d.h. der Frequenzteiler 8 arbeitet mit seinem Sollteilungsverhältnis (im Beispiel 2025/32).

Soll eine Phasenkorrektur um ein Bit erfolgen, so muß ein bestimmter Zahlenwert +N = 225 in den Vorwärts-Rückwärts-Zähler VR5 geladen werden. Hierdurch wird der Zählerstand Z > 0 und somit das erste UND-Gatter AND1 zum Zeitpunkt des Einspeicherimpulses TE freigegeben. Folglich wird dem Frequenzteiler 8 ein erster Einfügen-Befehl EB zugeführt, der - in diesem Beispiel - eine A-Periode einfügt. Hierdurch ergibt sich am Taktausgang 85 ein minimaler positiver Phasensprung.

Der Einfügen-Befehl EB wird über die Logik-Einheit LE 5 zurückgekoppelt und bewirkt das Rückwärtszählen des Vorwärts-Rückwärts-Zählers um 1. Dieser Vorgang wiederholt sich noch 224mal bis der dem Phasensprung von 1 Bit entsprechende Zahlenwert abgearbeitet ist und die Nullstellung wieder erreicht ist.

Ist dagegen der Zählerstand bei einen anliegende Einblenden Befehl ungleich Null, dann wird der Zahlenwert 225 zu dem aktuellen Zählerstand in der Logikeinheit LE5 hinzuaddiert.

Bei einem entgegengesetzt gerichteten Ausblenden-Befehl AB wird ein entsprechender negativer Zahlenwert - N in den Zähler eingegebenund zum Zählerstand addiert und es werden - in diesem Beispiel - entsprechend viele A-Perioden ausgeblendet, die sich am Ausgang 85 des Frequenzteilers 8 als minimale negative Phasensprünge auswirken.

Im 'eingeschwungenen' Zustand der Anordnung muß eine Überwachung des Speicherinhalts nicht mehr erfolgen. Während der Einschaltphase und bei Übertragungsfehlern der Stopfinformation usw. kann es jedoch zu einer Fehlsteuerung bei der Speicherbelegung kommen. Bei einem zu vollen Speicher kann daher über ein erstes OR-Gatter OR1 oder bei zu leeren Speicher über ein zweites OR-Gatter OR2 durch entsprechende Phasenkorrektursignale +SF und -SF , also durch Eingabe eines Zahlenwertes oder mehrerer Zahlenwerte, eine zusätzliche Phasenkorrektur des Ausgabetaktes TA und damit eine Normalisierung des Füllgrades erfolgen.

Bei einigen Systemen wird mit einer variablen Anzahl von Stopfbits oder Stopfbytes gearbeitet. Dies bedeutet lediglich, daß der Eingangszahlenwert N entsprechend heraufgesetzt wird, wenn um mehr als ein Bit korrigiert werden muß. Wenn ein neuer Stopfbefehl anliegt, bevor der alte Stopfbefehl abgearbeitet ist, dann wird zu dem Zählerstand Z der neue einzuspeichernde Zahlenwert N (oder -N) addiert bzw.

subtrahiert und der Zähler mit dem Ergebnis erneut geladen.

Diese Regelschleife arbeitet stets mit der vom Zeitgeber 9 vorgegebenen Korrekturgeschwindigkeit. Diese kann natürlich auch variabel gestaltet werden, indem die Periodendauer des Einspeichertaktes TE von der Größe des Stopfkriteriums abhängig gemacht wird. Hierzu sind wieder zahlreiche Schaltungsvarianten denkbar.

In Figur 4 ist eine Möglichkeit zur Realisierung unterschiedlicher Phasenkorrekturgeschwindigkeiten dargestellt.

Die zwischen dem Rampengenerator 5 und dem Frequenzteiler 8 eingeschaltete Logikschaltung 7* enthält einen sogenannten Segmenter 71, an dessen Ausgänge zwei Verteilerschaltungen 72 bzw. 73 angeschaltet sind. Der Zeitgeber 9* liefert vier unterschiedliche Impulsfolgen mit gleichen Phasenabständen. Der Segmenter 71 schaltet nun in Abhängigkeit der aus dem Zählerstand Z des Rampenzählers 5 ermittelten Korrektursignale KS einen, zwei oder vier Einspeichertakte TE1...TE4 während einer Periode des Zeitgebers 9* durch, wodurch während einer Periode das dann Ein- bzw. Ausblenden von Unterperioden mehrmals möglich ist.

Um Verbindungsleitungen zu sparen, können Einspeicherimpulse mit entsprechend höherer Pulsfolgefrequenz (dies entspricht der Zusammenfassung der Impulse TE1 bis TE4 über eine ODER-Schaltung) zu den einzelnen Verteilerschaltungen übertragen werden und die Impulsfolgen mit teilweise niedrigeren Pulsfolgefrequenzen durch Frequenzteiler erzeugt werden.

Der Segmenter 71 kann auch Teil der Synchronisierschaltung 89 in Figur 2 sein, der dann auch der Zählerstand Z des Rampenzählers über einen weiteren Steuereingang E89 zugeführt wird.

Eine weitere Möglichkeit zur Realisierung einer vom Zählerstand Z abhängigen Phasenkorrekturgeschwindigkeit besteht darin, den Zählerstand Z in einen weiteren Zähler mit einer längeren Zählperiode zu laden (oder vorher von einer Konstanten zu subtrahieren), bei dessen Endstand ein Korrekturimpuls abgegeben wird, wie dies beim eingangs beschriebenen Stand der Technik der Fall ist.

## Patentansprüche

1. Anordnung zur Rückgewinnung mindestens eines plesiochronen Digitalsignal (DS1), das in Zeitschlitzen eines synchronen Signals (MS) übertragen wird, wobei Frequenzunterschiede durch Stopfen ausgeglichen werden,

mit einem empfangsseitigen Pufferspeicher (6), in den das Digitalsignal (DS1) mit einem Schreibtakt-(TL1) eingeschrieben und mit einem Ausgabetakt (TA1) ausgelesen wird,

**dadurch gekennzeichnet**,

daß ein Rampengenerator (5; LE5, VR5) vorgesehen ist, in den ein der Größe des Stopfvorganges entsprechender Zahlenwert (z.B. + N) eingespeichert wird,

daß ein Frequenzteiler (8) zum Erzeugen des Ausgabetaktes (TA1) vorgesehen ist, an dessen Steuereingänge (81, 82) die Steuerausgänge (53, 54) des Rampengenerators (5; LE5, VR5) geführt sind, und

daß ein Zeitgeber (9, 9*) vorgesehen ist, der in vorbestimmten Zeitabständen ein Einspeichertaktsignal (TE, TEC) abgibt, das aufgrund des Zählstandes (Z) des Rampengenerators (5; LE5, VR5) eine Änderung der Überperiodendauer (BAAABAA......BAAA) des Frequenzteilers (8) steuert und gleichzeitig eine Verringerung des Zählerstandes (Z) in Richtung der Nullage des Rampengenerators (5; LE5, VR5) bewirkt.

2. Anordnung nach Anspruch 1,
**dadurch gekennzeichnet**,
daß der Frequenzteiler (8) als aperiodisch-quasiperiodischer Teiler (86, 87, 88) ausgebildet ist, der mindestens zwei unterschiedliche Unterperioden (A, B) aufweist.

3. Anordnung nach Anspruch 2,
**dadurch gekennzeichnet**,
daß der Frequenzteiler (8) eine Synchronisierschaltung (89) aufweist, die durch Ein- und Ausblenden von Unterperioden (z.B. A) die Phasenkorrektur des Ausgabetaktes (TA1) steuert.

4. Anordnung nach Anspruch 2 oder 3,
daß der Frequenzteiler (8) einen steuerbaren A/B-Teiler (86) enthält, der den Ausgabetakt (TA1) abgibt,
daß an den Ausgang des A/B-Teilers (86) ein C-Teiler (87) angeschaltet ist, der die Anzahl (C = 32) der Unterperioden (A, B) je Überperiode zählt,

daß dem C-Teiler (87) ein Decoder (88) nachgeschaltet ist, der aus dem aktuellen Zählerstand (Z) die zugehörige Unterperiode (A, B) decodert und entsprechende Steuersignale (SAP, SBP) für den A/B-Teiler (86) abgibt, und

daß die Synchronisierschaltung (89) Korrektureingänge (E83, E84) für Phasenkorrekturbefehle (EB, AB) und Steuereingänge (E81, E82), über die ihr vom Decoder (88) die aktuelle Unterperiode (A, B) signalisiert wird, aufweist, und über einen Steuerausgang (A89) die Zählperiode des C-Teilers (87) steuert.

5. Anordnung nach einem der vorhergehenden Ansprüche,
**dadurch gekennzeichnet**,
daß der Rampengenerator (5) einen Vorwärts-Rückwärts-Zähler (VR5) enthält, der bei Auftreten eines Stopfinformationssignals (SI1) mit einem Zahlenwert (z.B. + N) geladen wird, dessen Betrag mit jedem von ihm veranlaßten Phasenkorrekturbefehl (EB, AB) reduziert wird.

6. Anordnung nach einem der vorhergehenden Ansprüche,
**dadurch gekennzeichnet**,
daß ein Zeitgeber (7) vorgesehen ist, der ein Einspeichertaktsignal (TE, TEC) abgibt, das gemeinsam mit einem Phasenkorrekturbefehl (EB, AB) Frequenzteiler (85, 86, 87) steuert.

7. Anordnung nach Anspruch 6,
**dadurch gekennzeichnet**,
daß nur ein Zeitgeber (7) für mehrere Digitalsignale (DS1, ...DSn) vorgesehen ist und
daß eine Logikschaltung (7) zwischen Rampengenerator (5) und Frequenzteiler (8) eingeschaltet ist, die eine vom Zählerstand (Z) frequenzabhängige Folge von Korrekturbefehlen (EB, AB) erzeugt.

8. Anordnung nach einem der Ansprüche 1 bis 5,
**dadurch gekennzeichnet**,
daß vom Decoder (88) ein modifiziertes Einspeichertaktsignal (TEC) abgegeben wird, das gemeinsam mit einem Phasenkorrekturbefehl (EB, AB) den Frequenzteiler (8; 86, 87) in Abhängigkeit des Zählerstandes (Z) des Rampengenerator (5) steuert.

9. Anordnung nach einem der Ansprüche 5 bis 8,
**dadurch gekennzeichnet**,
daß ein vom Füllgrad des Pufferspeichers (6) abhängiges Phasenkorrektursignal ( + SF, -SF) dem Rampengenerator (5) zugeführt wird.

10. Anordnung nach einem der vorhergehenden Ansprüche,
**dadurch gekennzeichnet**,
daß ein programmierbarer Rampenzähler (5) und/oder ein programmierbarer Frequenzteiler (8) vorgesehen ist.

FIG 1

FIG 2

FIG 3

FIG 4